Europäisches Patentamt

European Patent Office

Office européen des brevets

(19)

(11) Veröffentlichungsnummer : **0 348 388 B1**

# (12)   EUROPÄISCHE PATENTSCHRIFT

(45) Veröffentlichungstag der Patentschrift :
16.10.91 Patentblatt 91/42

(51) Int. Cl.⁵ : **B01D 53/36, B01J 32/00**

(21) Anmeldenummer : **87907761.8**

(22) Anmeldetag : **28.11.87**

(86) Internationale Anmeldenummer :
**PCT/EP87/00742**

(87) Internationale Veröffentlichungsnummer :
**WO 88/04197 16.06.88 Gazette 88/13**

(54) **KATALYSATORTRÄGERKÖRPER.**

(30) Priorität : **13.12.86 DE 3642674**

(43) Veröffentlichungstag der Anmeldung :
**03.01.90 Patentblatt 90/01**

(45) Bekanntmachung des Hinweises auf die
Patenterteilung :
**16.10.91 Patentblatt 91/42**

(84) Benannte Vertragsstaaten :
**FR GB SE**

(56) Entgegenhaltungen :
**FR-A- 2 390 381**
**US-A- 3 978 000**
**Chemical Abstracts, vol. 85, No.18, 1 Novem-**
**ber 1976, (Columbus, Ohio, US), M:R: Tarase-**
**vich et al.: "Decomposition of oxides", see**
**page 505, abstract 131173m, & Zh. Prikl. Khim.**
**(Leningrad) 1976, 49(6), 1205-8**

(73) Patentinhaber : **Schumacher Umwelt- und**
**Trenntechnik GmbH**
**Zur Flügelau 70**
**W-7180 Crailsheim (DE)**

(72) Erfinder : **WIERLING, Reinhard**
**Lerchenstrasse 74**
**W-7180 Crailsheim (DE)**
Erfinder : **COORAY, Ranjit**
**Löchgauer Steige 14**
**W-7122 Besigheim (DE)**
Erfinder : **DURST, Michael**
**Amselweg 15**
**W-7189 Frankenhardt-Honhardt (DE)**

(74) Vertreter : **Hoeger, Stellrecht & Partner**
**Uhlandstrasse 14 c**
**W-7000 Stuttgart 1 (DE)**

EP 0 348 388 B1

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die Erfindung betrifft einen Katalysatorträgerkörper zur katalytischen Zersetzung von einzelnen Gemischanteilen aus Gasen oder Aerosolen in Gasströmen, insbesondere zur katalytischen Zersetzung von Wasserstoffperoxid in Luft.

In der Lebensmittel- und Pharmaindustrie und in anderen Bereichen wird Wasserstoffperoxid häufig zur Sterilisierung von Abfüllanlagen und Verpackungen eingesetzt. Da Wasserstoffperoxid in der Abluft giftig ist, müssen bestimmte Maximalkonzentrationen unterschritten werden. Es ist bekannt, Wasserstoffperoxid katalytisch zu zersetzen, beispielsweise wirken Platin oder Palladium in dieser Weise katalytisch. Es hat sich jedoch als nachteilig herausgestellt, daß bekannte Platin- oder Palladium-Katalysatoren nach kurzer Zeit in ihrer Wirkung nachlassen, so daß diese Materialien als Katalysator ausgetauscht werden müssen (zum Beispiel Autokeramikabgaskatalysatoren).

US-A-3 978 000 offenbart Katalysatoren, die Edelmetalle (z. B. Pt, Rh) auf Kohlenstoffträger enthalten. Zur Herstellung der Träger werden Rußpartikel durch innige Mischung mit einem organischen Bindemittel und Karbonisierung desselben miteinander verbunden.

Es ist Aufgabe der Erfindung, einen Katalysatorträgerkörper zu schaffen, mit dem die katalytische Zersetzung bestimmter Komponenten in einer Gasströmung, insbesondere die katalytische Zersetzung von Wasserstoffperoxid in Luftströmungen, dauerhaft katalysiert werden kann, ohne daß die Katalysatoren in ihrer Wirkung nachlassen.

Diese Aufgabe wird bei einem Katalysatorträgerkörper der eingangs beschriebenen Art erfindungsgemäß dadurch gelöst, daß er einen Stützkörper aus bindemittelfrei miteinander verbundenen Kohlenstoffpartikeln aufweist, daß die Kohlenstoffpartikel eine erste, das Stützgerüst ausbildende Kohlefraktion mit einer Teilchengröße zwischen 500 und 5000 $\mu m$, einer mittleren Porenweite des Stützgerüstes zwischen 50 und 1000 $\mu m$ und einer inneren Oberfläche der Teilchen von 0 bis 100 $m^2/cm^3$ und eine zweite Kohlefraktion aus hochporöser Aktivkohle mit einer inneren Oberfläche von 600 bis 3500 $m^2/cm^3$ und einer Teilchengröße von 0,1 bis 500 $\mu m$ umfassen, daß die Aktivkohleteilchen in die Zwischenräume der Teilchen der ersten Kohlefraktion eingelagert sind und daß auf dem Stützkörper und/oder den Aktivkohleteilchen eine enorganische, katalytisch wirkende Substanz, insbesondere Edelmetalle und deren Verbindungen, aufgebracht ist.

Es hat sich überraschenderweise herausgestellt, daß durch einen solchen Aufbau eines Stützkörpers eine synergistische Wirkung eintritt, die katalytische Wirkung des Edelmetallkatalysators, beispielsweise Platin, ist wesentlich ausgeprägter, wenn das Material auf einen Katalysatorträger des beschriebenen Aufbaus aufgebracht wird, als bei der Verwendung der Katalysatorsubstanz ohne eine solche Kombination zwei sich ergänzender Kohlearten. Offenbar bilden die verschiedenen Kohlearten und die anorganische Katalysatorsubstanz gemeinsam aktive Zentren, die sich gegenseitig beeinflussen und dadurch die notwendigen Zersetzungsreaktionen mit wesentlich erhöhter Reaktionsgeschwindigkeit ablaufen lassen. Durch den skelettartigen Aufbau des Stützkörpers wird in Kombination mit der eingebauten Aktivkohle und der aufgebrachten anorganischen Katalysatorsubstanz eine Zwangsdurchströmung des mit Schadstoffen beladenen Gases erreicht, die eine sichere Zersetzungsreaktion gewährleisten. Dabei ist es offenbar vorteilhaft, daß die erste Kohlefraktion, die eine sehr geringe innere Oberfläche aufweist und somit sehr kompakt ausgebildet ist, eine Zwangsdurchströmung des mit Schadstoffen beladenen Gases dadurch erreicht, daß das Stützgerüst dicht oder nahezu dicht für die Gasströmung ist. Infolge des höheren Druckverlustes an dieser dichten Kohlefraktion werden im wesentlichen die offenen Poren beziehungsweise die poröse Aktivkohle durchströmt, so daß das Gas mit den aktiven, mit der Katalysatorsubstanz beschickten Flächen intensiv in Kontakt kommt.

Es hat sich herausgestellt, daß durch den beschriebenen Aufbau des Katalysatorträgerkörpers und der daraus folgenden Zwangsdurchströmung im Verhältnis zu sonst verwendeten Katalysatorbettschüttungen eine wesentlich kleinere Verweilzeit der Gasströmung realisiert werden kann, die beispielsweise in der Größenordnung zwischen 0,15 und 2,0 Sekunden liegen. Die katalytische Wirkung tritt bei Abgastemperaturen in dem weiten Temperaturbereich zwischen 0°C und 120°C ein. Dabei kann bei der katalytischen Zersetzung von Wasserstoffperoxid die Konzentration in der zu reinigenden Luftströmung zwischen 0 und 500 mg pro $m^3$ Luft betragen. Je nach der Vorkonzentration, der Strömungsgeschwindigkeit und der Temperatur kann dabei diese Konzentration nach Durchgang durch den Katalysatorträgerkörper auf Werte zwischen 0,01 mg und 0,8 mg pro $m^3$ reduziert werden.

Es ist vorteilhaft, wenn die Teilchengröße der ersten Kohlefraktion zwischen 1000 und 3000 $\mu m$ liegt. Weiterhin ist es günstig, wenn die mittlere Porenweite des aus der ersten Kohlefraktion gebildeten Stützgerüstes zwischen 200 und 300 $\mu m$ liegt.

Vorzugsweise liegt die innere Oberfläche der ersten Kohlefraktion zwischen 30 und 50 $m^2/cm^3$. Vorzugsweise wird eine zweite Kohlefraktion mit einer inneren Oberfläche zwischen 800 und 1500 $m^2/cm^3$ gewählt. Die Teilchengröße der zweiten Kohlefraktion liegt vorzugsweise zwischen 0,1 und 2 $\mu m$.

Vorzugsweise ist vorgesehen, daß der Anteil der katalytischen Substanz zwischen 0,01 und 1 Gewichtsprozent des Katalysatorträgerkörpers liegt.

Insbesondere wird dieser Anteil zwischen 0,05 und 0,5 Gewichtsprozenten liegen.

Die katalytische Substanz ist vorzugsweise kolloidal verteilt.

Besonders bewährt hat sich ein Katalysatorträgerkörpei, dessen katalytische Substanz Platin ist. Ein solcher Körper ist vorzugsweise zur katalytischen Zersetzung von Wasserstoffperoxid außerordentlich geeignet.

Der Katalysatorträgerkörper kann unterschiedliche Formen annehmen, beispielsweise kann er in Form von Platten oder Hohlzylindern ausgebildet sein. Es ist vorteilhaft, wenn über seine äußere Oberfläche ein Kunststoffgewebe oder Vlies gezogen ist. Dies kann eventuellen Austrag der feinen Kohlepartikel sicher verhindern und außerdem eine Koaleszer-Wirkung auf die bei der katalytischen Reaktion entstehenden und unter Umständen tropfenförmigen Reaktionsprodukte ausüben.

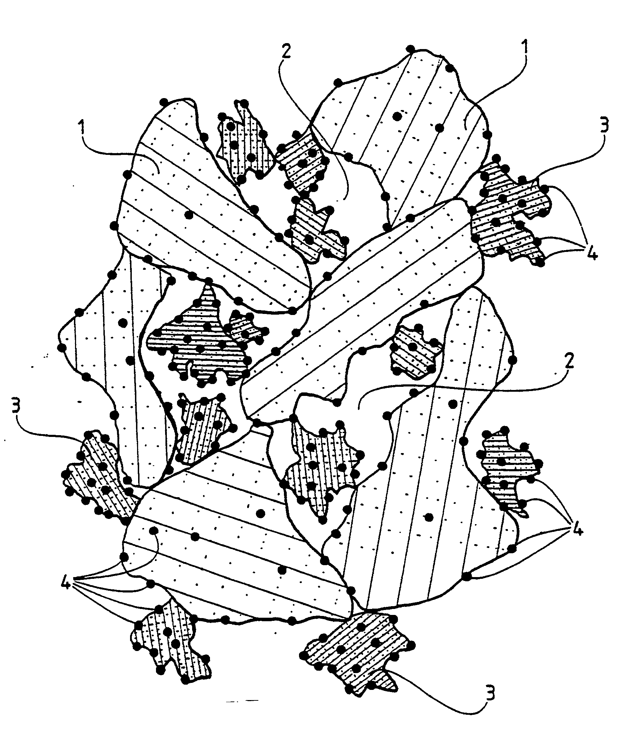

Die nachfolgende Beschreibung dient im Zusammenhang mit der Zeichnung der näheren Erläuterung. Die Zeichnung zeigt schematisch einen stark vergrößerten Ausschnitt aus einem Katalysatorträgerkörper.

Der in der Zeichnung dargestellte Katalysatorträgerkörper umfaßt erste Teilchen 1 aus Kohlenstoff, die eine Teilchengröße zwischen 500 und 5000 µm und eine relativ geringe Oberfläche in der Größenordnung zwischen 0 und 100 m²/cm³ aufweisen. Diese Teilchen 1 einer ersten Kohlefraktion sind bindemittelfrei miteinander verbunden, beispielsweise durch Sintern oder andere sinterähnliche Verbindungsvorgänge, bei denen unter Verwendung erhöhter Temperaturen und gegebenenfalls erhöhten Drucks eine Karbonisierung an den Übergangsstellen zwischen benachbarten Kohlepartikeln erreicht wird. Zwischen den Teilchen 1 und der ersten Fraktion ergeben sich Poren 2 mit einer mittleren Porenweite des Stützgerüstes zwischen 50 und 1000 µm. In diesen Poren 2 sind Teilchen 3 einer zweiten Kohlefraktion angeordnet. Diese zweite Kohlefraktion umfaßt hochporöse Aktivkohle mit einer Teilchengröße von 0,1 bis 500 µm und einer inneren Oberfläche zwischen 600 und 3500 m²/cm³. Auch diese Kohleteilchen der zweiten Fraktion sind bindemittelfrei miteinander und mit den angrenzenden Kohlenstoffpartikeln der ersten Fraktion verbunden.

Zur Herstellung eines solchen Stützgerüstes aus zwei verschiedenen Kohlenstoffpartikeln werden die entsprechenden Kohlenstoffpartikel miteinander vermischt und anschließend durch Sintern oder Karbonisieren eines Bindemittels miteinander verbunden. Auch im letzten Fall ist nach der Karbonisierung das Bindemittel vollständig zersetzt, so daß die Bindung eine reine, bindemittelfreie Kohlenstoffbindung darstellt.

Ein solcher Stützkörper aus zwei verschiedenen Kohlefraktionen 1 und 3 wird anschließend mit kolloidal verteilten Katalysatorteilchen 4 beschichtet. Diese Katalysatorteilchen 4 können beispielsweise Platinteilchen sein, die sich auf der Oberfläche der Teilchen 1 und 3 und teilweise auch in den Poren der sehr porösen Aktivkohleteilchen 3 ablagern. Die Beschichtung erfolgt, indem man die kolloidal verteilten Katalysatorteilchen 4 mittels einer flüssigen oder gasförmigen Trägersubstanz durch den Stützkörper leitet.

Durch den in dieser Weise ausgebildeten Katalysatorträgerkörper wird der zu reinigende Gasstrom hindurchgeleitet. Dabei fließt der Gasstrom im wesentlichen durch die Poren 2 und durch die sehr porösen Aktivkohleteilchen 3, so daß der Gasstrom in diesem Bereich mit den Katalysatorteilchen 4 in innigen Kontakt kommt. Aufgrund einer Zusammenwirkung der beiden Kohlefraktionen und der Katalysatorteilchen erfolgt dabei eine katalytische Zersetzung von Verunreinigungen des Gasstromes, die wesentlich wirksamer erfolgt als bei dem Kontakt des Gasstromes mit Katalysatorteilchen, die nicht in dieser Weise auf ein aus zwei Kohlefraktionen aufgebautes Stützgerüst aufgebracht sind.

Es hat sich herausgestellt, daß ein in dieser Weise ausgebildeter Katalysatorträgerkörper unanfällig gegen andere Substanzen ist, beispielsweise gegen die dem Wasserstoffperoxid üblicherweise zugesetzten Stabilisatoren. Da alle Teilchen fest miteinander verbunden sind, ist ein solcher Katalysatorträgerkörper abriebfest, so daß er auch in der Lebensmittelindustrie eingesetzt werden kann. Der Katalysatorträgerkörper ist unempfindlich gegen Wasserdampfkondensat, er kann bei einer relativen Feuchte zwischen 0 und 100% betrieben werden. Er ist damit sogar einsetzbar für wässrige Wasserstoffperoxidlösungen.

Aufgrund der relativ großen Poren ergibt sich im übrigen beim Durchleiten eines Gasstromes durch den Katalysatorträgerkörper nur ein außerordentlich geringer Druckverlust.

**Patentansprüche**

1. Katalysator zur katalytischen Zersetzung von einzelnen Gemischanteilen aus Gasen oder Aerosolen in Gasströmen, insbesondere zur katalytischen Zersetzung von Wasserstoffperoxid in Luft, bei dem eine katalytisch wirkende, anorganische Substanz, insbesondere Edelmetalle oder deren Verbindungen, auf Aktivkohle aufgebracht ist, **dadurch gekennzeichnet**, daß er einen Stützkörper aus bindemittelfrei miteinander verbundenen Kohlenstoffpartikeln (1, 3) aufweist, daß die Kohlenstoffpartikel eine erste, den Stützkörper bildende Kohlefraktion mit einer Teilchengröße zwischen 500 und 5000 µm, einer mittleren Porenweite des Stützgerüstes zwischen 50 und 1000 µm und einer inneren Oberfläche der Teilchen (1) von 0 bis 100 m²/cm³ und eine zweite Kohlefraktion aus hochporöser Aktivkohle mit einer inneren Oberfläche von 600 bis 3500 m²/cm³ und einer Teilchengröße von 0,1 bis 500 μm umfassen, daß die Aktivkohleteilchen (3) in die Zwischenräume (2) der Teilchen (1) der ersten Kohlefraktion eingelagert sind und daß die katalytisch wirkende Substanz (4) gegebenenfalls auch auf dem Stützkörper aufgebracht ist.

2. Katalysator nach Anspruch 1, dadurch gekennzeichnet, daß die Teilchengröße der ersten Kohlefraktion zwischen 1000 und 3000 μm liegt.

3. Katalysator nach Anspruch 1 oder 2, dadurch gekennzeichnet, daß die mittlere Porenweite des aus der ersten Kohlefraktion gebildeten Stützkörpers zwischen 200 und 300 μm liegt.

4. Katalysator nach einem der voranstehenden Ansprüche, dadurch gekennzeichnet, daß die innere Oberfläche der ersten Kohlefraktion zwischen 30 und 50 m²/cm³ liegt.

5. Katalysator nach einem der voranstehenden Ansprüche, dadurch gekennzeichnet, daß die innere Oberfläche der zweiten Kohlefraktion zwischen 800 und 1500 m²/cm³ liegt.

6. Katalysator nach einem der voranstehenden Ansprüche, dadurch gekennzeichnet, daß die Teilchengröße der zweiten Kohlefraktion zwischen 0,1 und 2 μm liegt.

7. Katalysator nach einem der voranstehenden Ansprüche, dadurch gekennzeichnet, daß der Anteil der katalytischen Substanz zwischen 0,01 und 1 Gewichtsprozent liegt.

8. Katalysator nach Anspruch 7, dadurch gekennzeichnet, daß der Anteil der katalytischen Substanz zwischen 0,05 und 0,5 Gewichtsprozent liegt.

9. Katalysator nach einem der voranstehenden Ansprüche, dadurch gekennzeichnet, daß die katalytische Substanz (4) kolloidal verteilt ist.

10. Katalysator nach einem der voranstehenden Ansprüche, dadurch gekennzeichnet, daß die katalytische Substanz (4) Platin ist.

11. Katalysator nach einem der voranstehenden Ansprüche, dadurch gekennzeichnet, daß über seine äußere Oberfläche ein Kunststoffgewebe oder Vlies gezogen ist.

## Claims

1. A catalyst for the catalytic decomposition of individual parts of mixtures of gases or aerosols in gas streams, in particular for the catalytic decomposition of hydrogen peroxide in air, in which a catalytically active inorganic substance, in particular precious metals or compounds thereof, is applied to activated carbon, characterized in that it comprises a supporting body of carbon particles (1, 3) joined together without binders, the carbon particles have a first carbon fraction forming the supporting body and with a particle size of between 500 and 5000 μm, an average pore width of the supporting structure of between 50 and 1000 μm and an internal surface area of the particles (1) of from 0 to 100 m²/cm³ and a second carbon fraction of highly porous activated carbon with an internal surface area of from 600 to 3500 m²/cm³ and a particle size of from 0·1 to 500 μm, the activated carbon particles (3) are embedded in the inter stices (2) of the particles (1) of the first carbon fraction, and the catalytically active substance (4) is optionally also applied to the supporting body.

2. A catalyst according to Claim 1, characterized in that the particle size of the first carbon fraction is between 1000 and 3000 μm.

3. A catalyst according to Claim 1 or 2, characterized in that the average pore width of the supporting body formed by the first carbon fraction is between 200 and 300 μm.

4. A catalyst according to any one of the preceding Claims, characterized in that the internal surface area of the first carbon fraction is between 30 and 50 m²/cm³.

5. A catalyst according to any one of the preceding Claims, characterized in that the inner surface of the second carbon fraction is between 800 and 1500 m²/cm³.

6. A catalyst according to any one of the preceding Claims, characterized in that the particle size of the second carbon fraction is between 0·1 and 2 μm.

7. A catalyst according to any one of the preceding Claims, characterized in that the proportion of the catalytic substance is between 0·01 and 1% by weight.

8. A catalyst according to Claim 7, characterized in that the proportion of the catalytic substance is between 0·05 and 0·5% by weight.

9. A catalyst according to any one of the preceding Claims, characterized in that the catalytic substance (4) is colloidally distributed.

10. A catalyst according to any one of the preceding Claims, characterized in that the catalytic substance (4) is platinum.

11. A catalyst according to any one of the preceding Claims, characterized in that a plastics fabric or fleece is stretched over its outer surface.

## Revendications

1. Catalyseur pour la décomposition catalytique de différents composants de mélanges de gaz ou d'aérosols dans des courants gazeux, notamment pour la décomposition catalytique du peroxyde d'hydrogène dans l'air, dans lequel une substance minérale catalytique, notamment des métaux nobles ou leurs composés, est déposée sur du charbon actif, caractérisé en ce qu'il présente un corps de soutien en particules de carbone (1, 3) liées entre elles en l'absence de liant, que les particules de carbone comprennent une première fraction de charbon constituant te corps de soutien, ayant des particules de dimensions comprises entre 500 et 5 000 µm, un diamètre de pore moyen dans t'ossature de soutien compris entre 50 et 1 000 µm et une surface interne pour les particules (1) comprise entre 0 et 100 m²/cm³ et une seconde fraction de charbon en charbon actif très poreux ayant une surface interne comprise entre 600 et 3 500 m²/cm³ et des particules de dimensions comprises entre 0,1 et 500 µm, que les particules de charbon actif (3) sont logées dans les interstices (2) entre les particules (1) de la première fraction de charbon et que la substance (4) catalytique est déposée également le cas échéant sur le corps de soutien.

2. Catalyseur selon la revendication 1, caractérisé en ce que les dimensions des particules de la première fraction de charbon sont comprises entre 1 000 et 3 000 µm.

3. Catalyseur selon la revendication 1 ou 2, caractérisé en ce que le diamètre moyen des pores du corps de soutien formé par la première fraction de charbon est compris entre 200 et 300 µm.

4. Catalyseur selon l'une des revendications précédentes, caractérisé en ce que la surface interne de la première fraction de charbon est comprise entre 30 et 50 m²/cm³.

5. Catalyseur selon l'une des revendications précédentes, caractérisé en ce que la surface interne de la seconde fraction de charbon est comprise entre 800 et 1 500 m²/cm³.

6. Catalyseur selon l'une des revendications précédentes, caractérisé en ce que les dimensions des particules de la seconde fraction de charbon sont comprises entre 0,1 et 2 µm.

7. Catalyseur selon l'une des revendications précédentes, caractérisé en ce que te pourcentage de substance catalytique est compris entre 0,01 et 1% en poids.

8. Catalyseur selon la revendication 7, caractérisé en ce que te pourcentage de substance catalytique est compris entre 0,05 et 0,5% en poids.

9. Catalyseur selon l'une des revendications précédentes, caractérisé en ce que la substance catalytique (4) est à distribution colloïdale.

10. Catalyseur seton l'une des revendications précédentes, caractérisé en ce que la substance catalytique (4) est du platine.

11. Catalyseur selon l'une des revendications précédentes, caractérisé en ce qu'un tissu de plastique ou un non tissé est tendu sur sa surface externe.